# EUROPÄISCHE PATENTSCHRIFT

(11) **EP 2 841 317 B1**
(45) Veröffentlichungstag und Bekanntmachung des Hinweises auf die Patenterteilung: **05.08.2020**
(21) Anmeldenummer: 13720243.8
(22) Anmeldetag: 22.04.2013
(51) Int. Cl.: B60W 30/18, B60W 10/06, B60W 10/10, B60W 10/113

(54) **VERFAHREN ZUM BETREIBEN EINES ANTRIEBSSTRANGS EINES KRAFTFAHRZEUGS MIT FREILAUF-MOTOR-AUS-FUNKTION, SOWIE STEUERGERÄT UND KRAFTFAHRZEUG**
METHOD FOR OPERATING A DRIVE TRAIN OF A MOTOR VEHICLE HAVING A FREEWHEELING ENGINE-OFF FUNCTION, CONTROL DEVICE AND MOTOR VEHICLE
PROCÉDÉ DESTINÉ À FAIRE FONCTIONNER UNE CHAÎNE CINÉMATIQUE D'UN VÉHICULE À MOTEUR DOTÉ D'UNE FONCTION STOP&START, AINSI QU'APPAREIL DE COMMANDE ET VÉHICULE À MOTEUR

(30) Priorität: 27.04.2012 DE 102012008632
(43) Veröffentlichungstag der Anmeldung: 04.03.2015
(73) Patentinhaber: Audi AG, 85045 Ingolstadt (DE)
(72) Erfinder: SCHIERGL, Andreas, 84069 Schierling (DE)
(74) Vertreter: Wohnert, Dietmar
(86) Internationale Anmeldenummer: PCT/EP2013/001193
(87) Internationale Veröffentlichungsnummer: WO 2013/159896

(56) Entgegenhaltungen:
- DE-A1-102007 012 875
- DE-A1-102010 024 045
- DE-A1-102010 052 385
- US-A- 6 151 978
- US-A1- 2011 054 765

## Beschreibung

Die Erfindung betrifft ein Verfahren zum Betreiben eines Antriebsstrangs eines Kraftfahrzeugs mit Verbrennungsmotor, Automatikgetriebe und wenigstens einer Antriebsachse, wobei zum Zwecke der Kraftstoffeinsparung während des Fahrbetriebs bei unbetätigtem Fahrpedal bzw. Gaspedal eine zum Automatikgetriebe gehörende Kupplung geöffnet und anschließend der Verbrennungsmotor abgestellt wird.

Die Erfindung betrifft ferner ein Steuergerät und ein Kraftfahrzeug.

Aus der DE 10 2010 008 726 A1 ist ein Verfahren zum Betreiben eines Antriebssystems an einem Kraftfahrzeug mit Automatik-Doppelkupplungsgetriebe und Hybridantrieb mit Verbrennungsmotor und Elektromotor bekannt. In der DE 10 2010 008 726 A1 sind auch Möglichkeiten beschrieben, wie während des Fahrbetriebs der Wiederstart des Verbrennungsmotors aus einem ausgeschalteten bzw. abgestellten Zustand möglichst komfortabel, gleichzeitig jedoch auch dynamisch erfolgen kann.

Als Maßnahme zur Kraftstoffeinsparung kann bei Kraftfahrzeugen insbesondere mit Automatik-Doppelkupplungsgetriebe der Verbrennungsmotor während des Fahrbetriebs unter bestimmten Bedingungen abgestellt werden, bspw. dann, wenn der Fahrer das Gaspedal nicht betätigt (so genannte "Freilauf-Motor-Aus-Funktion" oder so genanntes "Start-Stop-Segeln"). Im "Freilauf-Motor-Aus"-Betriebsmodus wird zunächst die aktive Fahrkupplung des Doppelkupplungsgetriebes geöffnet und anschließend der Verbrennungsmotor abgestellt, was eine Erweiterung des als "Segeln" bezeichneten Betriebsmodus darstellt, bei dem die Kupplung geöffnet wird und der Verbrennungsmotor in den Leerlauf übergeht, sobald das Gaspedal unbetätigt ist.

DE 10 2010 052385 A1 offenbart ein Verfahren zum Betreiben eines Antriebsstrangs eines Kraftfahrzeugs mit Verbrennungsmotor, Automatikgetriebe und wenigstens einer Antriebsachse, wobei zum Zwecke der Kraftstoffeinsparung während des Fahrbetriebs bei unbetätigtem Fahrpedal eine zum Automatikgetriebe gehörende Kupplungseinrichtung geöffnet und anschließend der Verbrennungsmotor abgestellt wird, wobei bei erneutem Betätigen des Fahrpedals der Verbrennungsmotor gestartet und im Automatikgetriebe zunächst ein Gang für die Wiederanbindung der Antriebsachse gewählt wird.

Bei der Freilauf-Motor-Aus-Funktion muss, sobald der Fahrer das Gaspedal wieder betätigt, der Verbrennungsmotor gestartet und schnellstmöglich Kraftschluss zu einer Antriebsachse hergestellt werden, um ein schnelles Wiederherstellen des Vortriebs zu ermöglichen. Der Erfindung liegt die Aufgabe zugrunde Möglichkeiten aufzuzeigen, wie dies geschehen kann.

Die Lösung der Aufgabe erfolgt mit einem erfindungsgemäßen Verfahren zum Betreiben eines Antriebsstrangs eines Kraftfahrzeugs mit Verbrennungsmotor, Automatikgetriebe und wenigstens einer Antriebsachse, wobei zum Zwecke der Kraftstoffeinsparung während des Fahrbetriebs bei unbetätigtem Fahrpedal bzw. Gaspedal eine zum Automatikgetriebe gehörende Kupplungseinrichtung geöffnet und anschließend der Verbrennungsmotor abgestellt wird, wobei vorgesehen ist, dass bei erneutem Betätigen des Fahrpedals (während des Fahrbetriebs durch den Fahrer) der Verbrennungsmotor gestartet und im Automatikgetriebe zunächst der konstruktiv vorgegebene höchstmögliche Gang für die Wiederanbindung des Verbrennungsmotors an die Antriebsachse gewählt wird. Dadurch ist die Hochlaufzeit der Motordrehzahl möglichst kurz, so dass ein vom Verbrennungsmotor erzeugtes erforderliches Antriebsdrehmoment schnell an der Antriebsachse zur Verfügung steht.

Unter einem hohen Gang wird eine Gangstufe bzw. Fahrstufe des Automatikgetriebes verstanden, die ein niedriges Übersetzungsverhältnis aufweist. Unter einem niedrigen Gang wird eine Gangstufe des Automatikgetriebes verstanden, die ein hohes Übersetzungsverhältnis aufweist.

Zusammenfassend und mit anderen Worten stellt sich die Erfindung wie folgt dar: Befindet sich das Kraftfahrzeug im so genannten "Freilauf-Motor-aus"-Betriebsmodus bzw. im so genannten "Start-Stop-Segeln"-Betriebsmodus, so soll bei erneuter Drehmomentanforderung durch Betätigen des Fahrpedals bzw. Gaspedals das Antriebsdrehmoment schnellstmöglich wieder zur Verfügung stehen. Hierzu wird zunächst der Verbrennungsmotor gestartet. Zum Wiederanbinden des Verbrennungsmotors an die Antriebsachse wird zunächst der konstruktiv vorgegebene höchstmögliche Gang im Automatikgetriebe gewählt, weil hierbei das Hochdrehen des Verbrennungsmotors in eine Synchrondrehzahl (wie nachfolgend näher definiert) sehr schnell erfolgt.

Bevorzugt ist vorgesehen, dass das Automatikgetriebe ein Automatik-Doppelkupplungsgetriebe ist (nachfolgend nur als Doppelkupplungsgetriebe bezeichnet). Ein solches Doppelkupplungsgetriebe besteht aus zwei Teilgetrieben mit je einer Kupplungseinrichtung und einer bestimmten Anzahl von Gängen bzw. Gangstufen. Bei einem Doppelkupplungsgetriebe kann das Hochschalten von einem niedrigen Gang in höhere Gänge schnell und ohne Zugkraftunterbrechung durch Kupplungsumschalten erfolgen. Das Kupplungsumschalten unter Last kann auch zum Hochbeschleunigen des Verbrennungsmotors erfolgen. In bestimmten Gangkombinationen ist dies auch mit herkömmlichen Stufenautomaten bewerkstelligbar.

Weiterhin ist erfindungsgemäß vorgesehen, dass das Einlegen des konstruktiv vorgegegebenen höchstmöglichen Gangs und das Starten des Verbrennungsmotors gleichzeitig erfolgt. D. h., um Zeit zu sparen ist es vorteilhaft, beim Einlegen eines hohen Gangs zwei Dinge gleichzeitig auszuführen, nämlich das Einlegen eines geeigneten hohen Gangs und das Starten bzw. Wiederstarten des Verbrennungsmotors und schnelles Hochdrehen desselben auf die erforderliche Synchrondrehzahl. Sind diese beiden Dinge entsprechend ausgeführt worden, so kann die zuständige Kupplungseinrichtung ruckfrei geschlossen werden und das Antriebsmoment steht dann an der Antriebsachse zur Verfügung.

Ist nach dem Wiederanbinden (des Verbrennungsmotors an die Antriebsachse) ein höheres Drehmoment an der Antriebsachse erforderlich (bspw. aufgrund der abgefragten Fahrpedalstellung), so kann im Automatikgetriebe unverzüglich in einen niedrigen oder niedrigeren Gang geschaltet werden, wodurch ein solches höheres Drehmoment mehr oder weniger sofort an der Antriebsachse bereit gestellt wird.

Bevorzugt ist vorgesehen, dass vor Wiederanbindung des Verbrennungsmotors an die Antriebsachse der Verbrennungsmotor reproduzierbar über eine Drehzahlvorgabeschnittstelle vom Automatikgetriebe auf eine gangabhängige Synchrondrehzahl (Synchrondrehzahl = Produkt aus Abtriebsdrehzahl und Übersetzung) gebracht wird.

Mit einem ersten nebengeordneten Anspruch erstreckt sich die Lösung der Aufgabe auch auf ein Steuergerät, bzw. auf eine Regel- und/oder Steuereinrichtung, für den Antriebsstrang eines Kraftfahrzeugs, wobei dieses Steuergerät zur Durchführung des erfindungsgemäßen Verfahrens ausgebildet ist, was insbesondere durch einen im Steuergerät hinterlegten Softwarecode erfolgt. Mit einem zweiten nebengeordneten Anspruch erstreckt sich die Lösung der Aufgabe ferner auf ein Kraftfahrzeug, wobei es sich insbesondere um einen Personenkraftwagen (PKW) handelt, der einen Verbrennungsmotor, ein Automatikgetriebe (insbesondere ein Doppelkupplungs-Automatikgetriebe), wenigstens eine Antriebsachse und wenigstens ein solches Steuergerät aufweist.

Die nachfolgend beschriebenen Vorgehensweisen sorgen einerseits für ein langes Rollen des betreffenden Kraftfahrzeugs im "Freilauf-Motor-aus"-Betriebsmodus durch Reduzierung des Schleppmoments und andererseits für ein schnelles Wiederherstellen des Vortriebs aus dem "Freilauf-Motor-aus"-Betriebsmodus (wie obenstehend erläutert).

Damit das betreffende Kraftfahrzeug im "Freilauf-Motor-aus"-Betriebsmodus möglichst lange rollt muss versucht werden, die auftretenden Fahrwiderstande zu reduzieren. Der Luftwiderstand des Kraftfahrzeugs und der Rollwiderstand der Reifen kann nicht beeinflusst werden, jedoch die Schleppmomente, die sich im Automatikgetriebe und auch im Bremssystem ergeben.

Das Schleppmoment im Automatikgetriebe kann durch geeignete Auslegung der Gangstufen und durch gelüftete Kupplungseinrichtungen reduziert werden. Ferner kann das Schleppmoment im "Freilauf-Motor-aus"-Betriebsmodus dadurch reduziert werden, dass das Automatikgetriebe in eine "Neutral"-Stellung geschaltet wird (wobei das Kraftfahrzeug neutral rollt), wodurch der nachteilige Einfluss des Schleppmoments verbessert wird, was insbesondere auch für ein Doppelkupplungsgetriebe gilt. Ferner kann das Rollverhalten des Kraftfahrzeugs auch verbessert werden, indem durch geeignete Maßnahmen die Bremsklötze an den Kraftfahrzeug-Betriebsbremsen weit genug geöffnet bzw. gelüftet werden, wodurch das Schleppmoment im Bremssystem verringert und insbesondere eliminiert wird.

Damit die oben erläuterte "Freilauf-Motor-aus"-Funktion vom Kunden bzw. vom Fahrer akzeptiert wird, muss dafür gesorgt werden, dass die Verzögerung bzw. die Zeitspanne zwischen dem Wiederbetätigen des Gaspedals und einem spürbarem Vortrieb möglichst kurz ausfällt. Dies wird u. a. dadurch erreicht, dass der Verbrennungsmotor zu einem möglichst frühen Zeitpunkt nach dem Wiederstart über das Automatikgetriebe und über die Kupplungseinrichtung ein Antriebsmoment auf die Antriebsachse übertragen kann.

Bei einem Automatikgetriebe muss hierzu zunächst ein hoher Gang (bei einem Doppelkupplungsgetriebe in einem der Teilgetriebe) mit einer niedrigen Synchrondrehzahl (mathematisches Produkt aus Abtriebsdrehzahl und Übersetzung) eingelegt werden, damit die Hochlaufzeit der Motordrehzahl möglichst kurz ausfällt. Nach dem Wiederstart des Verbrennungsmotors muss dieser auf die Synchrondrehzahl gebracht werden. Dies geschieht reproduzierbar über eine Drehzahlvorgabeschnittstelle zwischen dem Doppelkupplungsgetriebe und dem Verbrennungsmotor. Dadurch wird das erstmalige Einregeln der Motordrehzahl unabhängig von der Zeitdauer für das Gangeinlegen und Schließen der Kupplungseinrichtung des Automatikgetriebes bzw. Doppelkupplungsgetriebes.
Erst wenn die Motordrehzahl des Verbrennungsmotors die Synchrondrehzahl des hohen Gangs erreicht hat oder übersteigt, kann durch Schließen der zugehörigen Kupplungseinrichtung ein Antriebsmoment für den Antrieb des Kraftfahrzeugs vom Verbrennungsmotor an die Antriebsachse übertragen werden.
Falls über die geschlossene Kupplungseinrichtung ein Antriebsmoment übertragen wird wenn die Motordrehzahl noch weit unter der Synchrondrehzahl des eingelegten Gangs liegt, würde die träge Masse des Verbrennungsmotors beschleunigt werden, was zu einem Abbremsen des Kraftfahrzeugs und somit zu einem spürbaren Ruck führt. Es wird daher quasi gewartet, bis die Drehzahl des Verbrennungsmotors die Synchrondrehzahl des gewünschten Gangs erreicht hat, bevor die betreffende Kupplungseinrichtung geschlossen und Drehmoment an die Antriebsachse zur Fahrzeugbeschleunigung übertragen wird. Hierfür ist es sinnvoll, den konstruktiv vorgegebenen höchstmöglichen Gang einzulegen, wie bereits obenstehend erläutert.

Wenn der Fahrer beim Wieder-Gasgeben zur Beendung der "Freilauf-Motor-aus"-Phase eine stärkere Beschleunigung wünscht, muss das Automatikgetriebe einen kleinen Gang bereitstellen. Dies wird z. B. dadurch erreicht, dass nach dem ersten Anbinden des Verbrennungsmotors an die Antriebsachse, was in einem hohen Gang ("Zwischengang") erfolgt, sofort eine Rückschaltung in einen niedrigeren Gang eingeleitet wird. Bei einem Doppelkupplungsgetriebe kann dies bewerkstelligt werden, indem zunächst der gewünschte Gang in dem anderen Teilgetriebe eingelegt und mit der zum Teilgetriebe mit dem hohen Gang gehörenden Kupplungseinrichtung die Drehzahl des Verbrennungsmotors auf die Synchrondrehzahl des kleineren Gangs eingeregelt wird. Dieses Einregeln erfolgt über das Verhältnis des Motordrehmoments und des von der Kupplungseinrichtung übertragenen Drehmoments. Da während des Einregelvorgangs bereits das übertragene Drehmoment der Kupplungseinrichtung erhöht werden kann, bevor die Motordrehzahl die hohe Synchrondrehzahl des kleinen Gangs erreicht hat, wird das Kraftfahrzeug früher beschleunigen.

Wird hingegen versucht die Drehzahl des Verbrennungsmotor erst einmal auf die hohe Synchrondrehzahl des kleinen Gangs zu bringen, ohne über den hohen Zwischengang zu gehen, muss mit dem Schließen der Kupplungseinrichtung gewartet werden. Dies führt zu einer unerwünschten Totzeit zwischen Gaspedalbetätigung und spürbarer Fahrzeugbeschleunigung. Der Vorteil dieser Anbindungsstrategie mit Zwischengang (d. h. Anbinden auf einen hohen Zwischengang aus dem Zustand "Freilauf-Motor-aus" heraus und anschließender Rückschaltung in einen zur Fahrstrategie passenden niedrigeren Gang) ist darin zu sehen, dass sich die "Totzeit" zwischen Gas geben und Fahrzeugbeschleunigung verkürzt.

Nachfolgend wird die Erfindung unter Bezugnahme auf die einzige Figur beispielhaft näher beschrieben. Aus dieser Beschreibung ergeben sich weitere Merkmale und Vorteile. Konkrete Merkmale können hierbei allgemeine Merkmale der Erfindung darstellen und mit anderen Merkmalen verbundene Merkmale können auch einzelne Merkmale der Erfindung darstellen.

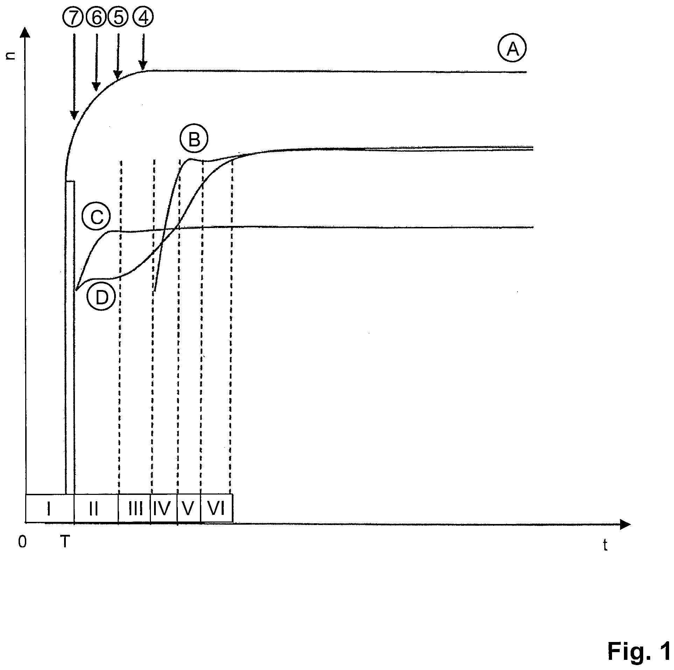

Fig. 1 zeigt schematisch den Ablauf beim Wiederanbinden des Verbrennungsmotors an einem Kraftfahrzeug mit "Freilauf-Motor-aus"-Funktion.
In dem in Fig. 1 gezeigten Diagramm ist die horizontale Achse t die Zeitachse. Die vertikale Achse n gibt die Motordrehzahl an. Mit 4, 5, 6 und 7 sind Gänge bzw. Gangstufen des Automatikgetriebes bezeichnet. Die mit A bezeichnete Kurve gibt den Gaspedalwert (Fahrpedalwert) an. Die mit B bezeichnete Kurve gibt die Synchrondrehzahl für den Gang 4 an. Die mit C bezeichnete Kurve gibt die Synchrondrehzahl für den Gang 7 an. Die mit D bezeichnete Kurve gibt die Motordrehzahl an. Mit I bis VI sind verschiedenen Phasen beim Wiederanbinden des Verbrennungsmotors bezeichnet, wie nachfolgend näher erläutert.
Zum Zeitpunkt 0 ist das Fahrpedal unbetätigt. Das Kraftfahrzeug befindet sich in einem "Freilauf-Motor-aus"-Betriebsmodus, wie oben beschrieben. Zum Zeitpunkt T wird vom Fahrer das Fahrpedal wieder betätigt, was über eine Fahrpedalauswertung erfasst wird (Phase I).

Hieraufhin wird von einem Steuergerät der konstruktiv vorgegebene höchstmögliche Gang 7, für das Automatikgetriebe gewählt. Dieser Gang 7 wird anschließend eingelegt, wobei es sich nur um einen Zwischengang handelt. Gleichzeitig wird der Verbrennungsmotor gestartet (Phase II).
Hierauf hin wird die zum Automatikgetriebe gehörende Kupplungseinrichtung zumindest teilweise geschlossen. Die Motordrehzahl des Verbrennungsmotors regelt dieser bis zu einer Synchrondrehzahl nach Vorgabe durch eine Drehzahlvorgabeschnittstelle ein (Phase III). Bis zur Phase III kann das Fahrpedal noch ausgewertet werden, um ggf. einen kleineren Zielgang zu bestimmen.

Diese Vorgang kann durch eine Drehzahlvorgabeschnittstelle überwacht und insbesondere auch geregelt werden. Ist die Synchrondrehzahl erreicht, so wird das Gangeinlegen eines kleineren Zielgangs (Gang 4) vorbereitet (Phase IV).

Anschließend wird der kleinere Zielgang, in diesem Fall der Gang 4, eingelegt, wobei eine Drehzahlregelung auf die für diesen Gang höhere Synchrondrehzahl durch die Kupplungseinrichtung erfolgt (Phase V).

Anschließend wird die Kupplungseinrichtung ganz geschlossen, worauf hin das vom Verbrennungsmotor bereitgestellte Antriebsmoment über das Automatikgetriebe und deren zugehörige Kupplungseinrichtung an die Antriebsachse weitergeleitet wird (Phase VI).

Im Folgenden werden die vorausgehend erläuterten Phasen I bis VI stichpunktartig wiedergegeben:
I Fahrpedalauswertung und Gangbestimmung (hoher Gang / Zwischengang)
II Gangeinlegen / Motorstart
III Kupplung anlegen
IV Ende Drehzahlregelung durch Synchrondrehzahlvorgabe / Beginn Gangeinlegen Zielgang
V Gangeinlegen Zielgang / Drehzahlregelung durch Kupplung des Zielgangs
VI Momentenübergabe an Kupplung des Zielgangs

## Patentansprüche

1. Verfahren zum Betreiben eines Antriebsstrangs eines Kraftfahrzeugs mit Verbrennungsmotor, Automatikgetriebe und wenigstens einer Antriebsachse, wobei zum Zwecke der Kraftstoffeinsparung während des Fahrbetriebs bei unbetätigtem Fahrpedal eine zum Automatikgetriebe gehörende Kupplungseinrichtung geöffnet und anschließend der Verbrennungsmotor abgestellt wird, wobei bei erneutem Betätigen des Fahrpedals der Verbrennungsmotor gestartet und im Automatikgetriebe zunächst der konstruktiv vorgegebene höchstmögliche Gang für die Wiederanbindung des Verbrennungsmotors an die Antriebsachse gewählt wird, wobei das Einlegen des konstruktiv vorgegebenen höchstmöglichen Gangs und das Starten des Verbrennungsmotors gleichzeitig erfolgt.

2. Verfahren nach Anspruch 1, **dadurch gekennzeichnet, dass** das Automatikgetriebe ein Automatik-Doppelkupplungsgetriebe ist.

3. Verfahren nach einem der vorhergehenden Ansprüche, **dadurch gekennzeichnet, dass** nach dem Wiederanbinden unverzüglich in einen niedrigeren Gang geschaltet wird, falls ein höheres Drehmoment an der Antriebsachse gefordert wird.

4. Verfahren nach einem der vorhergehenden Ansprüche, **dadurch gekennzeichnet, dass** vor Wiederanbindung des Verbrennungsmotors an die Antriebsachse der Verbrennungsmotor reproduzierbar über eine Drehzahlvorgabeschnittstelle vom Automatikgetriebe auf eine gangabhängige Synchrondrehzahl gebracht wird.

5. Steuergerät für den Antriebsstrang eines Kraftfahrzeugs, **dadurch gekennzeichnet, dass** dieses zur Durchführung eines Verfahrens gemäß einem der vorausgehenden Ansprüche ausgebildet ist.

6. Kraftfahrzeug, insbesondere Personenkraftwagen, umfassend einen Verbrennungsmotor, ein Automatikgetriebe, wenigstens eine Antriebsachse und wenigstens ein Steuergerät gemäß Anspruch 5.

## Claims

1. Method for operating a drive train of a motor vehicle with an internal combustion engine, automatic transmission and at least one drive axle, wherein, in order to save fuel in driving mode when the accelerator pedal is not activated, a clutch device, which is associated with the automatic transmission, is opened and the internal combustion engine is subsequently shut down, wherein, when the accelerator pedal is activated again, the internal combustion engine is started and the highest possible gear speed determined by the design is first selected in the automatic transmission for reconnection of the internal combustion engine to the drive axle, wherein engaging the highest possible gear determined by the design and starting the internal combustion engine take place simultaneously.

2. Method according to claim 1, **characterised in that** the automatic transmission is an automatic dual-clutch transmission.

3. Method according to any of the preceding claims, **characterised in that**, after reconnection a lower gear is immediately engaged, should a higher torque be required at the drive axle.

4. Method according to any of the preceding claims, **characterised in that**, before reconnection of the internal combustion engine to the drive axle, the internal combustion engine is reproducibly brought up to a gear-dependent synchronous speed by the automatic transmission via a speed specification interface.

5. Control device for the drive train of a motor vehicle, **characterised in that** this device is designed to implement a method according to any of the preceding claims.

6. Motor vehicle, in particular a passenger car, comprising an internal combustion engine, an automatic transmission, at least one drive axle and at least one control device according to claim 5.

## Revendications

1. Procédé pour faire fonctionner un groupe motopropulseur d'un véhicule à moteur avec un moteur à combustion interne, une transmission automatique et au moins un essieu moteur, dans lequel, pour économiser du carburant pendant le fonctionnement du service de bac lorsque la pédale d'accélérateur n'est pas actionnée, un appareil de liaison d'embrayage appartenant à la transmission automatique est ouvert et ensuite le moteur à combustion interne est arrêté, dans lequel
lorsque la pédale d'accélérateur est actionnée à nouveau, le moteur à combustion interne est démarré et, dans la transmission automatique, la vitesse la plus élevée possible prédéterminée de manière constructive pour la reconnexion du moteur à combustion interne à l'essieu moteur est choisie d'abord, dans lequel l'introduction de la vitesse la plus élevée possible prédéterminée de manière constructive et le démarrage du moteur à combustion interne sont effectués simultanément.

2. Procédé selon la revendication 1, **caractérisé en ce que** la transmission automatique est une transmission à double embrayage automatique.

3. Procédé selon l'une quelconque des revendications précédentes, **caractérisé en ce que** l'on commute, après la reconnexion, immédiatement à une vitesse plus faible, dans le cas où un couple plus élevé est requis sur l'essieu moteur.

4. Procédé selon l'une quelconque des revendications précédentes, **caractérisé en ce que**, avant la reconnexion du moteur à combustion interne à l'essieu moteur, le moteur à combustion interne est amené de manière reproductible à une vitesse de rotation synchrone dépendant de la vitesse via une interface de prédétermination de vitesse de rotation de la transmission automatique.

5. Appareil de commande pour le groupe motopropulseur d'un véhicule à moteur, **caractérisé en ce que** celui-ci est réalisé pour effectuer un procédé selon l'une quelconque des revendications précédentes.

6. Véhicule à moteur, en particulier voiture particulière, comprenant un moteur à combustion interne, une transmission automatique, au moins un essieu moteur et au moins un appareil de commande selon la revendication 5.
